**Europäisches Patentamt**

**European Patent Office**

**Office européen des brevets**

(19)

(11) Numéro de publication: **0 093 654**
**B1**

# (12) FASCICULE DE BREVET EUROPEEN

(45) Date de publication du fascicule du brevet:
**17.09.86**

(51) Int. Cl.⁴: **B 64 D 47/00,** B 60 Q 1/00

(21) Numéro de dépôt: **83400831.0**

(22) Date de dépôt: **27.04.83**

(54) **Système de production et de distribution d'énergie électrique pour des véhicules, et notamment des aéronefs.**

(30) Priorité: **05.05.82 FR 8207812**

(43) Date de publication de la demande:
**09.11.83 Bulletin 83/45**

(45) Mention de la délivrance du brevet:
**17.09.86 Bulletin 86/38**

(84) Etats contractants désignés:
**BE DE GB IT NL**

(56) Documents cités:
**DE - C - 764 355**
**FR - A - 956 141**
**FR - A - 1 212 370**

**WESTINGHOUSE ENGINEER, vol. 31, no. 4, juillet 1971,**
**pages 114-119, Pittsburgh, USA, M.A. GEYER et al.:**
**"Automatic control of aircraft electrical system reduces**
**wiring and improves reliability"**

(73) Titulaire: **Société Nationale Industrielle Aérospatiale**
**Société anonyme dite:, 37 Bld de Montmorency,**
**F-75016 Paris (FR)**

(72) Inventeur: **Jourdan, Jean-Marie, 43 Village du Soleil,**
**F-13540 Puyricard (FR)**
Inventeur: **Beteille, Jean, 3 rue J. Labatut,**
**F-31000 Toulouse (FR)**
Inventeur: **Bougon, Philippe Marie Michel, Lacrémade**
**Nord, F-13100 Le Tholonet (FR)**

(74) Mandataire: **Bonnetat, Christian et al, Cabinet PROPI**
*Conseils 23 rue de Léningrad, F-75008 Paris (FR)*

## Description

La présente invention concerne un système de production et de distribution d'énergie électrique pour véhicule, notamment pour aéronef, comportant au moins deux générateurs principaux de type continu ou alternatif mûs par les moteurs dudit véhicule, au moins une batterie d'accumulateurs, des démarreurs pour lesdits moteurs, éventuellement constitués par les générateurs principaux eux-mêmes, un cœur électrique formé de barres primaires alimentées à partir desdits générateurs principaux, de contacteurs primaires et de disjoncteurs primaires, un ensemble de barres secondaires alimentées à partir des barres primaires, de contacteurs secondaires et de disjoncteurs secondaires, un ensemble de boîtes à relais et de meubles électriques, un ensemble de meubles électroniques, des panneaux de commande, des dispositifs utilisateurs, ainsi qu'une pluralité de moyens de régulation et/ou de protection notamment pour les générateurs, la batterie et les démarreurs.

Un système de ce type est par exemple connu par les documents FR-A 1 212 370, DE-C 764 355, FR-A 956 141 ou la revue Westinghouse Engineer, vol. 31, no. 4, juillet 1971, pages 114–119, Pittsburgh, USA, M.A. Geyer et al.

On sait en effet que, à bord des avions, est prévu un système de production et de distribution d'énergie électrique comportant des générateurs mûs par les moteurs de l'avion. Ces générateurs peuvent être du type à courant continu ou à courant alternatif, de sorte que les avions peuvent être alimentés soit en énergie électrique continue, soit en énergie électrique alternative. Il est d'ailleurs usuel qu'un même avion comporte simultanément des moyens générateurs de courant continu et des moyens générateurs de courant alternatif, de façon que les différents équipements sont alimentés soit en énergie alternative, soit en énergie continue, en fonction du mode d'alimentation qui leur convient le mieux. Par exemple, les moteurs de l'avion entraînent des alternateurs alimentant un réseau alternatif et, par l'intermédiaire de transfo-redresseurs, ce réseau alternatif alimente un réseau continu. On remarquera de plus qu'il est usuel, dans les avions comportant un réseau continu, de prévoir un réseau alternatif dont la source est un convertisseur (onduleur) alimenté par le réseau continu.

L'invention concerne un système de production et de distribution d'énergie électrique qui, à bord d'un véhicule, peut aussi bien être utilisé seul, qu'en association avec un autre système de production et de distribution d'énergie, ce dernier en étant indépendant ou dérivé, ou bien encore en étant la source.

Par rapport à un système alternatif, un système continu présente l'avantage primordial de permettre le stockage de l'énergie électrique, de sorte qu'il permet d'alimenter les équipements nécessaires au vol en cas de défauts des génératrices ou des moteurs (de tels équipements étant dits de «dernier secours»), ainsi que d'assurer l'autonomie du démarrage des moteurs et de démarrer un éventuel groupe générateur auxiliaire (dit usuellement groupe APU). De plus, de nombreux équipements sont plus performants en courant continu, car il n'y a pas de pertes par hystérésis, et le couplage de diverses sources de courant continu peut s'effectuer sans problème sur le réseau, car avec le courant continu n'apparaît aucune astreinte de fréquence et de phase. Ce dernier avantage permet notamment de brancher successivement deux sources sur le même réseau (par exemple le groupe APU à la suite d'une génératrice défaillante), de manière à assurer une alimentation sans coupure des équipements.

En revanche, à puissance distribuée égale, un système continu nécessite un câblage de distribution, dont la masse est bien supérieure à celle du câblage de distribution d'un système alternatif. En effet, dans le cas d'un système alternatif, il est possible d'utiliser des tensions élevées et donc de réduire le diamètre des conducteurs.

L'objet de la présente invention est un système de production et de distribution d'énergie électrique, notamment pour avions et pour hélicoptères. Dans le cas où le système conforme à l'invention est du type continu, tout en permettant de bénéficier des avantages inhérents, rappelés ci-dessus, d'un système continu, il permet une réduction considérable de masse par rapport aux systèmes continus connus et présente une structure simple.

Les autres objectifs de la présente invention sont de réaliser un système qui satisfasse aux règlements de certification existants et permette:

– une disponibilité opérationnelle maximale permettant d'une part l'alimentation en dernier secours pour au moins un atterissage en sécurité et un vol d'au moins trente minutes et d'autre part, des rebondances de sécurité supérieures aux normes fixées par les règlements, pour permettre, par exemple, un décollage avec certains éléments en panne;

– une recherche simple de l'origine de fumées en cas de début d'incendie d'origine électrique, ce qui est particulièrement important dans le cas d'avions à cabine pressurisée;

– une isolation rapide de toutes les sources de courant électrique en cas d'atterrissage forcé;

– le démarrage autonome des moteurs, aussi bien au sol qu'en vol, soit directement, soit par l'intermédiaire d'un groupe auxiliaire APU;

– l'alimentation de servitudes, permettant l'autonomie au sol, par exemple remplissage des réservoirs en carburant, éclairage minimum, etc.;

– l'alimentation sans coupure de certains équipements sensibles.

A ces fins, selon l'invention, le système de production et de distribution d'énergie électrique du type mentionné ci-dessus, est caractérisé en ce qu'il comporte une unité centrale regroupant ledit cœur électrique, une partie dudit ensemble de disjoncteurs et de contacteurs secondaires, et lesdits moyens de régulation et/ou de protection et en ce que le reste dudit ensemble des disjoncteurs et des contacteurs secondaires est réparti entre l'ensemble des boîtes à relais et de meubles électriques, l'ensemble des meubles électroniques et chacun des panneaux de commande.

Ainsi, de façon connue, dans le système selon l'invention, la distribution du courant aux divers dispositifs utilisateurs est réalisée à partir, d'une part, de barres primaires et secondaires normales dont l'alimentation est fournie uniquement par les générateurs principaux, et, d'autre part, par des barres primaires et secondaires essentielles et de secours qui sont normalement alimentées par les générateurs principaux, mais qui sont automatiquement alimentées par les batteries en cas de pannes des générateurs principaux.

Grâce au système selon l'invention, la disposition desdites barres primaires et secondaires et l'affectation à ces barres de groupes d'équipements peuvent être choisies de manière à ne conserver accessibles des pilotes que le nombre minimum de disjoncteurs nécessaires pour la sécurité et les commodités opérationnelles. En outre, la décomposition obtenue permet de simplifier les procédures de recherche des fumées et de délester progressivement les barres conservées en secours selon la phase de vol, afin de tirer le meilleur parti de l'énergie stockée dans les batteries.

Dans un premier mode de réalisation du système selon l'invention, ladite unité centrale comporte une barre primaire d'alimentation normale, alimentée par l'ensemble des générateurs en parallèle à travers lesdits moyens de protection de ces derniers et alimentant une pluralité de barres secondaires d'alimentation normale à travers des premiers disjoncteurs primaires; une barre primaire d'alimentation essentielle et de secours reliées à ladite batterie à travers les moyens de protection et de régulation de celle-ci et à ladite barre primaire d'alimentation normale à travers un contacteur primaire et alimentant une pluralité de barres secondaires d'alimentation essentielle et de secours à travers des seconds disjoncteurs primaires; et au moins un disjoncteur secondaire et un contacteur secondaire reliant directement à la batterie une barre secondaire.

Cependant, dans un second mode de réalisation préféré du système selon l'invention, ladite unité centrale comporte autant de barres primaires d'alimentation normale qu'il y a de générateurs et chacune de ces barres primaires d'alimentation normale est alimentée par un seul générateur à travers les moyens de protection de ce dernier et alimente au moins une barre secondaire d'alimentation normale à travers un premier disjoncteur primaire; une barre primaire d'alimentation de secours reliée à ladite batterie à travers les moyens de protection et de régulation de celle-ci et à chacune des barres primaires d'alimentation normale par une pluralité de contacteurs primaires et alimentant une pluralité de barres secondaires d'alimentation essentielle et de secours à travers des seconds disjoncteurs primaires; et au moins un disjoncteur secondaire et un contacteur secondaire reliant directement à la batterie une barre secondaire.

Avantageusement, quel que soit le mode de réalisation, le véhicule étant un aéronef, ladite unité centrale comporte deux disjoncteurs secondaires et deux contacteurs secondaires associés reliant à la batterie deux barres secondaires dont l'une alimente des dispositifs devant rester constamment branchés et dont l'autre sert spécifiquement à alimenter des équipements lorsque l'aéronef est au sol. Notamment dans ce cas, il est préférable que le système comporte au moins deux batteries d'accumulateurs reliées en parallèle à ladite barre primaire d'alimentation de secours; ainsi, chacune desdites barres secondaires peut être alimentée par une des batteries à travers l'un des ensembles de disjoncteurs et de contacteurs secondaires.

De préférence, la pluralité des barres secondaires d'alimentation essentielle et de secours alimentées par la barre primaire essentielle et de secours à travers les seconds disjoncteurs primaires comportent au moins une barre secondaire disposée dans le poste de pilotage et destinée à alimenter des équipements d'approche et d'atterrissage, au moins une barre secondaire alimentant des disjoncteurs accessibles aux pilotes et destinée à une alimentation de secours commun, et au moins une, mais de préférence deux, barres secondaires destinées à une alimentation conservée en secours.

Lorsque le système est du type à courant continu, le véhicule étant un aéronef, au moins l'une des barres secondaires conservées en secours est alimentée par la barre primaire de secours à travers lesdits seconds disjoncteurs primaires et un convertisseur continu-alternatif et cette barre secondaire essentiell et de secours en courant alternatif alimente une pluralité de sous-barres secondaires alternatives, dont au moins l'une alimente des disjoncteurs accessibles aux pilotes et est destinée à alimenter des équipements d'approche et d'atterrissage, dont au moins une autre alimente des disjoncteurs accessibles aux pilotes et est destinée à une alimentation conservée en secours et dont au moins une troisième est disposée en fonction des commodités de l'installation et destinée à une alimentation de secours.

Pour des raisons de commodités, il est avantageux que les seconds disjoncteurs primaires soient du type disjoncteur-contacteur à commande à distance, plutôt que du type disjoncteur à réarmement manuel.

Dans un mode de réalisation concret, l'unité centrale comporte un boîtier mural dont la partie inférieure enferme les différents moyens de régulation et/ou de protection, dont la partie médiane par rapport à la hauteur comporte les contacteurs primaires, les disjoncteurs secondaires, les contacteurs secondaires associés et les barres primaires et dont la partie supérieure comprend les disjoncteurs primaires. Dans le cas d'application à un système pour avion bimoteur comportant deux barres primaires d'alimentation normale et une barre primaire d'alimentation essentielle et de secours, l'intérieur du boîtier mural est séparé dans le sens de la hauteur par des parois coupe-feu délimitant trois compartiments, tels que le compartiment médian enferme les éléments relatifs à la barre primaire d'alimentation essentielle et de secours, tandis que chacun des compartiments latéraux enferme les éléments relatifs à l'une desdits barres primaires d'alimentation normale. Un tel boîtier mural peut comporter des parois perforées permettant une ventilation naturelle ou l'adaptation d'une ventilation forcée. Avantageusement, la barre d'alimentation essentielle et de secours est fractionnée en deux parties réunies par un contacteur et le boîtier mural est également fractionné en deux parties physiquement séparées.

Les figures du dessin annexé feront bien comprendre comment l'invention peut être réalisée.

Sur ces figures, quoique la présente invention ne soit pas limitée par le nombre des moteurs de l'aéronef auquel elle est destinée, on a représenté des exemples de systèmes de production et de distribution d'énergie électrique continue pour avions bimoteurs.

La fig. 1 donne schématiquement l'architecture d'un système connu.

La fig. 2 illustre schématiquement l'architecture théoriquement possible pour un système de production et de distribution d'énergie électrique pour un avion bimoteur.

La fig. 3 montre schématiquement l'architecture du système selon l'invention.

Les fig. 4a, 5a et 6a montrent les schémas synoptiques simplifiés de trois exemples d'un système selon l'invention de type continu, dans le cas où les générateurs principaux sont des génératrices à courant continu.

Les fig. 4b, 5b et 6b sont des schémas synoptiques simplifiés correspondant respectivement aux exemples des fig. 4a, 5a et 6a, dans le cas où les générateurs principaux sont des alternateurs associés à des transfo-redresseurs.

La fig. 7 donne le schéma synoptique plus détaillé de l'exemple de réalisation de la fig. 6a.

La fig. 8 donne le schéma synoptique plus détaillé de l'exemple de réalisation de la fig. 6b.

La fig. 9 illustre une variante de réalisation du système de la fig. 8.

La fig. 10 est une vue de face d'un mode de réalisation concret du cœur électrique du système selon l'invention.

Les fig. 11 et 12 sont respectivement des coupes selon les lignes XI–XI et XII–XII de la fig. 10.

La fig. 13 illustre une variante du dispositif de la fig. 9.

Sur ces figures, des éléments identiques ou semblables portent des références identiques, d'une figure à l'autre, lesdites références étant éventuellement sur certaines figures affectées d'un indice.

Pour expliquer et décrire la présente invention, on a pris ci-après l'exemple d'avions commerciaux bimoteurs équipés d'un système de production et de distribution d'énergie électrique continue. Il va de soi que cet exemple est donné à titre illustratif et ne doit pas être considéré comme limitatif de l'invention.

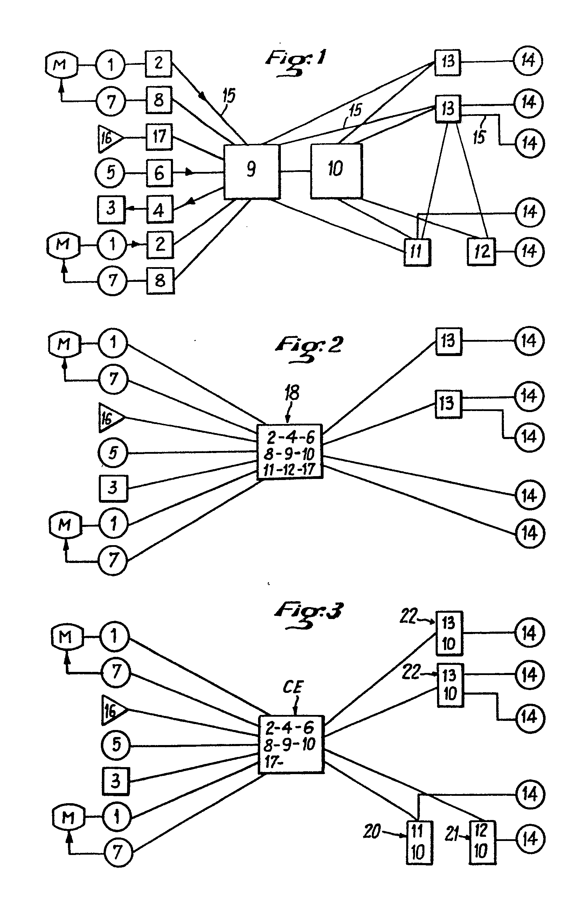

Comme le montre la fig. 1, le réseau à courant continu connu d'un avion commercial bimoteur comprend:

- deux générateurs principaux dont chacun est entraîné par l'un des moteurs M de l'avion. De tels générateurs 1 peuvent être soit des génératrices de courant continu, soit des alternateurs suivis de transfo-redresseurs;
- des systèmes de régulation et de protection 2 associés aux générateurs principaux 1;
- une ou plusieurs batteries d'accumulateurs 3;
- un système de charge et de protection 4 associé aux batteries 3;
- eventuellement, un groupe générateur auxiliaire 5 (APU);
- un système de régulation et de protection 6, pour le générateur auxiliaire 5;
- des démarreurs 7 pour les moteurs M. Ces démarreurs 7 peuvent être soit indépendants, soit confondus avec les générateurs 1 dans le cas où ceux-ci sont des géné-démarreurs;
- des systèmes de régulation et de protection 8 pour les démarreurs 7;
- un cœur électrique 9 comportant les barres, les contacteurs, et les disjoncteurs primaires;
- des panneaux de barres, de contacteurs et de disjoncteur secondaires 10;
- des boîtes à relais et des meubles électriques 11;
- des meubles électroniques 12 recevant les «boîtes noires» des systèmes;
- des panneaux de commande 13;
- des dispositifs utilisateurs 14 qui peuvent être groupés sur les planches de bord ou situés dans des zones diverses de l'avion;
- des liaisons 15 (câbles) entre les divers éléments ci-dessus;
- un branchement de prise de parc 16; et
- un système de protection 17 du branchement de prise de parc 16.

Les emplacements de certains de ces éléments sont fixés d'une manière impérative. Il en est notamment ainsi des générateurs 1 qui se trouvent sur les moteurs de l'avion, des panneaux de commande 13 disposés à portée de l'équipage et des dispositifs utilisateurs 14 répartis en divers emplacements définis selon les fonctions remplies.

Les autres éléments sont placés en fonction des nécessités d'accessibilité et des possibilités d'installation. Le cœur électrique 9 qui reçoit toutes les lignes de puissance et redistribue les alimentations primaires est situé dans une zone centrale. Les meubles électrique ou électroniques 11 et 12 doivent permettre un bon accès en maintenance. Par ailleurs, les batteries 3 doivent être peu éloignées du cœur électrique 9, d'accès en maintenance facile, et protégées en cas de crash. Enfin, un certain nombre des disjoncteurs secondaires 10 doit être accessible par l'équipage en vol lorsqu'ils constituent soit le seul moyen d'isoler un système en cas de fumée d'origine électrique, soit un risque pour la sécurité en cas de déclenchement intempestif.

Il résulte de tous ces impératifs, comme le fait apparaître la fig. 1, que le nombre et la longueur des liaisons 15 nécessaires pour réaliser les interconnexions entre les divers éléments est important. Il est donc souhaitable, pour simplifier l'installation, de réduire au maximum le nombre et la longueur des liaisons 15.

Pour cela, selon l'invention, on procède à une concentration et à une intégration des diverses fonctions réalisées par les différents éléments.

Quelle que soit la dimension de l'avion, selon l'invention, on réduit les dimensions des divers composants pour gagner de l'encombrement et de la masse. De plus, on regroupe plusieurs éléments dans un même boîtier. En effet, les liaisons à l'intérieur d'un même boîtier sont d'une manière générale, plus courtes, plus simples à réaliser, plus économiques et mieux protégées que des liaisons extérieures.

On pourrait penser, en suivant ces principes généraux de l'invention et comme le montre la fig. 2, à regrouper dans un élément unique central 18, à la fois les systèmes de régulation et de protection 2, 4, 6, 8, 17, le cœur électrique 9, les panneaux de disjoncteurs et les barres secondaires 10, les boîtes à relais et les meubles électriques 11, ainsi que les meubles électroniques 12.

Cependant, une telle disposition ne pourrait être réalisée que dans le cas où l'ensemble de l'installation serait assez simple pour que l'élément central 18 soit réalisable en un seul boîtier qui réponde à toutes les conditions énoncées ci-dessus. En outre, la nécessité de ségrégation des circuits pour des raisons de sécurité imposerait des précautions particulières de réalisation.

Aussi, pratiquement toujours, il sera nécessaire de fractionner l'élément central 18; d'une part pour permettre une implantation en accord avec la géométrie de l'avion, d'autre part pour qu'aucun ensemble n'ait des dimensions et un poids prohibitif en regard des commodités d'installations et de maintenance.

Deux éléments en particulier doivent généralement (et notamment dans le cas d'avions bimoteurs commerciaux) constituer des unités indépendantes du reste: il s'agit des boîtes à relais et meubles électriques 11 et des meubles électroniques 12.

Par ailleurs, l'implantation des disjoncteurs secondaires 10 soulève des problèmes importants dont la résolution dépend essentiellement des schémas de principes fonctionnels de la distribution et des technologies utilisées. L'intégration dans le cœur électrique 9 peut s'avérer impossible dans certains cas et ne présente pas forcément la meilleure solution. C'est pourquoi, selon une particularité importante de la présente invention, on répartit les disjoncteurs secondaires 10 entre les éléments du réseau 9, 11, 12 et 13.

Le choix de la répartition sera fait en fonction des critères:

1) de sécurité,
2) de gain de masse,
3) de commodité opérationnelle.

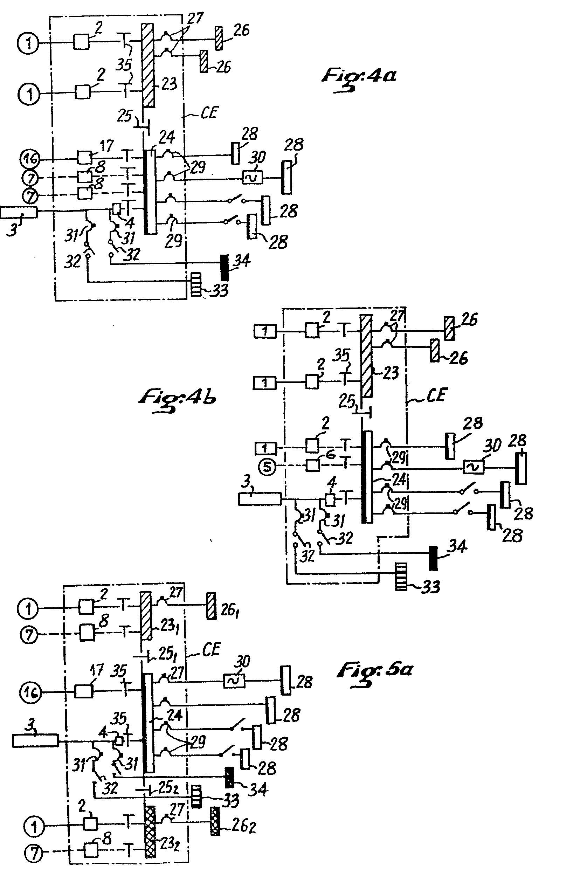

La fig. 3 annexée donne le schéma synoptique d'un système de production et de distribution d'énergie électrique continue conforme à l'invention.

Comme le montre cette fig. 3, le système selon l'invention comporte un élément central CE, qui, outre le cœur électrique usuel 9, regroupe les systèmes de régulation et de protection 2, 4, 6, 8 et 17 et une partie des disjoncteurs secondaires 10; des éléments électriques 20, qui, outre les boîtes à relais et les meubles électriques 11, comportent une partie des disjoncteurs et des barres secondaires 10; des éléments électroniques 21 qui, outre les meubles électroniques 12, comprennent une partie des disjoncteurs et des barres secondaires 10; et des éléments de commande 22 qui, outre les panneaux de commande 13, comportent également une partie desdits disjoncteurs et barre secondaires 10.

Ainsi, le cœur électrique intégré CE selon l'invention comporte des fonctions qui dépassent celles habituellement attribuées aux cœurs électriques (adjonction des fonctions des dispositifs 2, 4, 6, 8 et 17 et partiellement 10).

En conséquence, la définition de ce cœur électrique est nécessairement plus complexe que celle habituellement admise (ceci se traduisant par ailleurs par une simplification de l'ensemble de l'installation). Une telle définition comporte la détermination du nombre de barres primaires et secondaires à envisager. On sait que les barres primaires et secondaires, encore appelées barres bus, constituent les éléments de liaison entre les sources de courant et les dispositifs utilisateurs par l'intermédiaire des éléments de coupure (contacteur relais. . . etc.), et des éléments de protection (disjoncteur. . . etc.). Bien entendu, le nombre de barres ou sous-barres à prévoir est lié au nombre de groupes de systèmes que l'on peut associer.

L'objectif mentionné ci-dessus de recherche de l'origine de fumées conduit à définir en premier lieu un moyen permettant de couper rapidement l'alimentation du plus grand nombre de systèmes possibles, tout en conservant un groupe de systèmes suffisants pour poursuivre le vol et éliminer les fumées. Une procédure simple doit par la suite permettre de remettre en service successivement les systèmes sains en éliminant les systèmes défectueux.

Par ailleurs, l'objectif mentionné ci-dessus concernant le dernier secours conduit à conserver l'alimentation de dernier secours sur un nombre aussi petit que possible de systèmes permettant, en premier lieu un déroutement, et ensuite un atterrissage en sécurité.

Les groupes de systèmes définis par ces deux objectifs ne se recouvrent pas totalement, mais ils ont de nombreux points communs.

Si l'on considère les ensembles de systèmes correspondant à chacune des phases de vol, on peut définir les groupes suivants:

a) système minimum pour la recherche de fumées,

b) système de dernier secours en phase de croisière,

c) système de dernier secours en phase d'approche et d'atterrissage,

d) systèmes normaux.

Parmi ces systèmes, les systèmes des groupes a) et b) ont une partie commune importante; les groupes de systèmes indépendants et complémentaires peuvent donc être constitués:

1) des équipements minimum communs à la recherche de fumées et au dernier secours,

2) des équipements de recherche de fumées,

3) des équipements de dernier secours en phase de croisière,

4) des équipements de dernier secours en phase d'approche et d'atterrissage,

5) des équipements normaux.

De plus, pour satisfaire les objectifs de sécurité liés au taux de panne des équipements, ou pour permettre d'assurer une mission avec certains équipements en panne, une duplication d'un certain nombre de systèmes est généralement prévue.

Il s'ensuit deux catégories qui recoupent les groupes précédents:

1) des systèmes qui sont en un seul exemplaire à bord,

2) des systèmes qui présentent une duplication.

Enfin, pour compléter le tour d'horizon des groupes de systèmes nécessaires, il convient d'ajouter les systèmes constamment branchés sur les batteries, mais comportant une possibilité de coupure à utiliser en cas de crash.

Ceci concerne certains équipements tels que montres ou référence inertielle, ainsi que les systèmes qui sont alimentés au sol pour assurer certains services (remplissage du réservoir, éclairage minimum, etc.) afin d'obtenir l'autonomie au sol sans être obligé de mettre toute l'installation sous tension.

Le schéma du cœur électrique CE selon l'invention dépend également dans une certaine mesure du type d'alimentation retenu, à savoir alimentation exclusivement en courant continu, ou bien alimentation mixte encourant continu et encourant alternatif. Dans le cas d'une alimentation mixte, il apparaît alors deux variantes, qui sont respectivement l'alimentation par génératrices à courant continu et convertisseur continu-alternatif et alimentation par transfo-redresseurs associés chacun à un alternateur.

La différence entre ces deux types concerne essentiellement la régulation, les protections et le réseau alternatif normal.

En outre, on peut considérer des cas différents, suivant que le démarrage des moteurs est obtenu par des géné-démarreurs ou par des démarreurs séparés et suivant qu'il existe une prise de parc ou un groupe auxiliaire.

Sur les fig. 4a, 4b, 5a, 5b, 6a et 6b, on a représenté schématiquement quelques exemples de cœur CE selon l'invention correspondant au minimum de barres que l'on peut envisager dans les cas indiqués ci-dessus. Ces schémas simplifiés n'indiquent pas la décomposition en groupes droit ou gauche des éléments qui sont doublés. Les fig. 4a, 5a et 6a montrent des modes de réalisation comportant deux génératrices de courant continu 1 et une prise de parc 16, tandis que les fig. 4b, 5b et 6b illustrent des modes de réalisation comprenant trois transfo-redresseurs 1 (deux principaux associés directement à deux alternateurs mûs par les moteurs et le troisième auxiliaire pouvant être branché sur l'un ou l'autre des alternateurs) et un groupe générateur auxiliaire APU 5 servant également au démarrage des moteurs.

Dans les modes de réalisation des fig. 4a et 4b, le cœur électrique CE comporte une barre primaire 23 d'alimentation normale (ou principale) et une barre primaire 24 d'alimentation de secours commun, les barres 23 et 24 étant reliées entre elles par l'intermédiaire d'un contacteur 25. La barre primaire 23 est alimentée par les deux génératrices ou par les deux transfo-redresseurs principaux 1 par l'intermédiaire des protections 2, incorporées au cœur CE, et alimente des barres secondaires 26, par l'intermédiaire de disjoncteurs primaires 27. La barre primaire 24 est reliée à la prise de parc 16 ou au transfo-redresseur auxiliaire 1 et à la batterie 3, respectivement par l'intermédiaire des protections 17, 2 et 4, incorporées au cœur CE et alimente, d'une part les démarreurs 7 des moteurs ou 5 du groupe APU à travers une protection 8 ou 6 et, d'autre part, des barres secondaires 28, par l'intermédiaire de disjoncteurs primaires 29. Au moins l'une des barres secondaires 28 peut être alimentée en courant alternatif par l'intermédiaire d'un générateur alternatif de secours (convertisseur) 30 alimenté à partir de la barre primaire 24. Par ailleurs, le cœur CE incorpore des disjoncteurs secondaires 31, par l'intermédiaire desquels peuvent être alimentées directement à partir de la batterie 3, mais à travers des contacteurs 32, des barres secondaires pour des systèmes constamment branchés 34 ou pour les servitudes au sol 33.

Des contacteurs de lignes 35 sont interposés juste en amont des barres primaires du cœur électrique CE, sur chaque liaison à un élément 1, 3, 7 ou 16.

Les modes de réalisation des fig. 4a à 4b sont particulièrement simples; cependant, ils présentent l'inconvénient de ne comporter qu'une seule barre primaire normale 23, ce qui pourrait conduire à la perte de toutes les alimentations normales en cas de défaut sur cette barre ; par ailleurs, le couplage de deux génératrices en parallèle (cas de la fig. 4a) peut présenter des inconvénients.

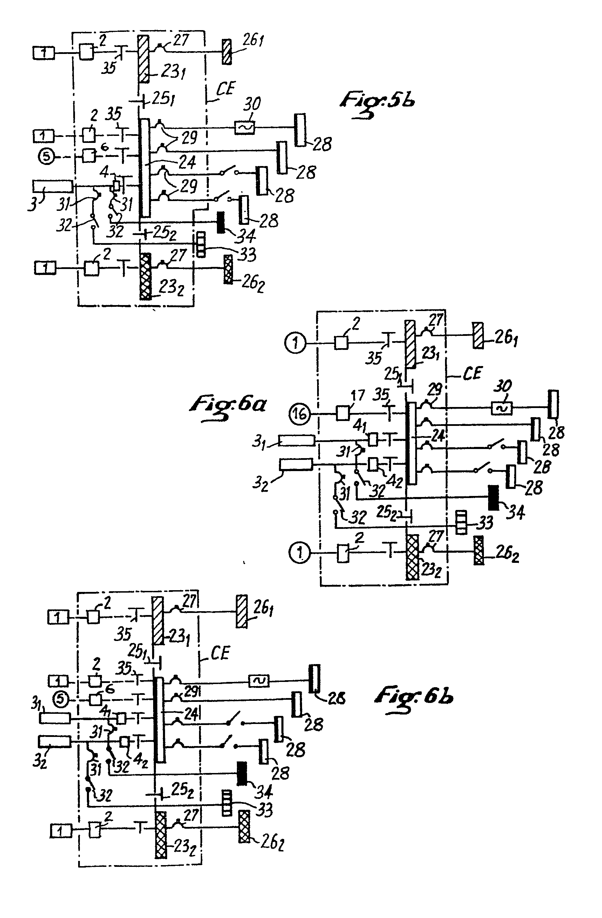

Les modes de réalisation des fig. 5a et 5b introduisent une séparation entre les deux alimentations normales qui peuvent chacune soit alimenter une fraction du réseau, soit la totalité. Cette disposition permet une meilleure ségrégation des circuits et une situation plus confortable en cas de perte d'une barre normale.

En effet, sur les fig. 5a et 5b, on peut voir que chaque génératrice ou transfo-redresseur principal 1 est associé à une barre primaire $23_1$ ou $23_2$ d'alimentation normale. Les barres primaires $23_1$ et $23_2$ sont reliées à des barres secondaires respectives $26_1$ et $26_2$ par l'intermédiaire de disjoncteurs primaires 27. Les barres primaires $23_1$ et $23_2$ sont respectivement réunies à la barre primaire 24 d'alimentation de secours, par l'intermédiaire de contacteurs $25_1$ et $25_2$. Les démarreurs 7 sont reliés aux barres $23_1$ et $23_2$, tandis que le groupe APU 5 est relié à la barre 24.

Dans le mode de réalisation des fig. 6a et 6b, la batterie de bord 3 a été fractionnée en deux batteries $3_1$ et $3_2$, bien entendu reliées à la barre primaire 24, et alimentant respectivement les barres secondaires 34 et 33 par l'intermédiaires des disjoncteurs secondaires 31 et des contacteurs secondaires 32. Compte tenu du rôle primordial des batteries en dernier secours, on obtient, grâce à un tel fractionnement, un facteur de sécurité supplémentaire. De plus, le fractionnement permet une meilleure manutention des batteries, qui sont toujours des éléments pesants. Les schémas des fig. 6a et 6b illustrent des modes de réalisation préférés du système selon l'invention.

On remarquera que les systèmes décrits ci-dessus utilisent les mêmes batteries pour le démarrage et le dernier secours, ce qui présente un avantage au point de vue du bilan global d'utilisation des batteries.

L'objectif de recherche simple de l'origine de fumées impose une procédure aussi simple et rapide que possible de réalimentation des divers systèmes à partir de la configuration de dernier secours en cas de fumée.

Ceci ne peut guère être envisagé, compte tenu du nombre très important de systèmes d'un avion moderne, que par une réalimentation par groupes de systèmes.

En effet, la réalimentation système par système conduirait à un temps très long du fait de l'attente nécessaire pour identifier la cessation de fumée après chaque manœuvre.

Cependant, le risque de fumée d'origine électrique, bien qu'il doive être pris en compte, est très faible (de l'ordre de $2.10^{-6}$) et on peut admettre que dans ces cas rares la mission soit terminée avec une redondance réduite et des conditions de confort diminué.

En conséquence, pour bénéficier des avantages relatifs au fait de ne conserver accessibles des pilotes que le minimum de disjoncteurs, on considère comme suffisants pour terminer la mission :

1) une partie des charges techniques ou commerciales normales,

2) un seul ensemble droit ou gauche des systèmes indispensables qui sont doubles (hors moteurs et contrôle moteurs qui seront conservés),

3) la totalité des systèmes normalement indispensables qui sont uniques à l'exclusion du système défectueux qui serait éliminé.

Ainsi, si on récapitule les groupes indépendants capables de remplir toutes les conditions ci-dessus, c'est-à-dire le nombre de barres primaires et de barres secondaires nécessaires on obtient la liste suivante :

1) trois barres primaires, à savoir une première barre d'alimentation normale, telle que $23_1$, une seconde barre d'alimentation normale telle que $23_2$ et une barre essentielle et de secours telle que 24 ;

2) une barre secondaire 34 toujours branchée sur les batteries 3 (sauf isolation en cas de crash) ;

3) une barre secondaire telle que 33 pour l'alimentation sol et alimentée directement à partir des batteries 3 ;

4) quatre barres secondaires d'alimentation normale en continu, telles que les barres secondaires 26, dont la répartition est choisie de façon à ce que la perte d'une barre normale $23_1$ ou $23_2$ permette de conserver un ensemble de systèmes suffisant pour le confort de pilotage ; une barre secondaire d'alimentation normale, alimentée par un convertisseur 115 V/400 Hz, dans le cas où l'avion n'a pas de source alternative de 400 Hz ;

5) quatre barres secondaires de secours en courant continu telles que 28 :

– une barre secondaire constamment alimentée qui distribue des alimentations à tous les systèmes indispensables en recherche de fumées qui existent en un seul exemplaire (les disjoncteurs secondaires de cette barre devant être à portée du pilote) ;

– une barre secondaire alimentant le groupe 1 mentionné ci-dessus des systèmes doublés, nécessaires en dernier secours en vol de croisière ;

– une barre secondaire alimentant le groupe 2 mentionné ci-dessus des systèmes doublés, nécessaires en dernier secours en vol de croisière ;

– une barre secondaire alimentant les systèmes nécessaires en dernier secours dans la phase d'atterrissage (disjoncteurs secondaires accessibles des pilotes).

– Eventuellement, une barre de recherche de fumée. Cependant, on doit remarquer que, dans la phase de recherche de fumées, les systèmes nécessaires pour assurer la ventilation forcée (évacuation des fumées) ou le fonctionnement en altitude des moteurs (pompes) sont généralement branchés sur le réseau alternatif (Réseau 400 Hz régulé).

Ces quatre arbres secondaires doivent être isolables par l'intermédiaire de contacteurs commandés du poste de pilotage.

6) Une barre secondaire 28 essentielle et de secours en alternatif alimentée par un convertisseur 30.

Cette barre secondaire 28 se divise ensuite de la même façon que la barre continue 24.

Il serait évidemment souhaitable pour la simplicité du réseau et l'amélioration du rendement énergétique de supprimer les barres de secours en courant alternatif. Ceci ne peut évidemment être obtenu que si les équipements correspondant peuvent être alimentés en courant continu.

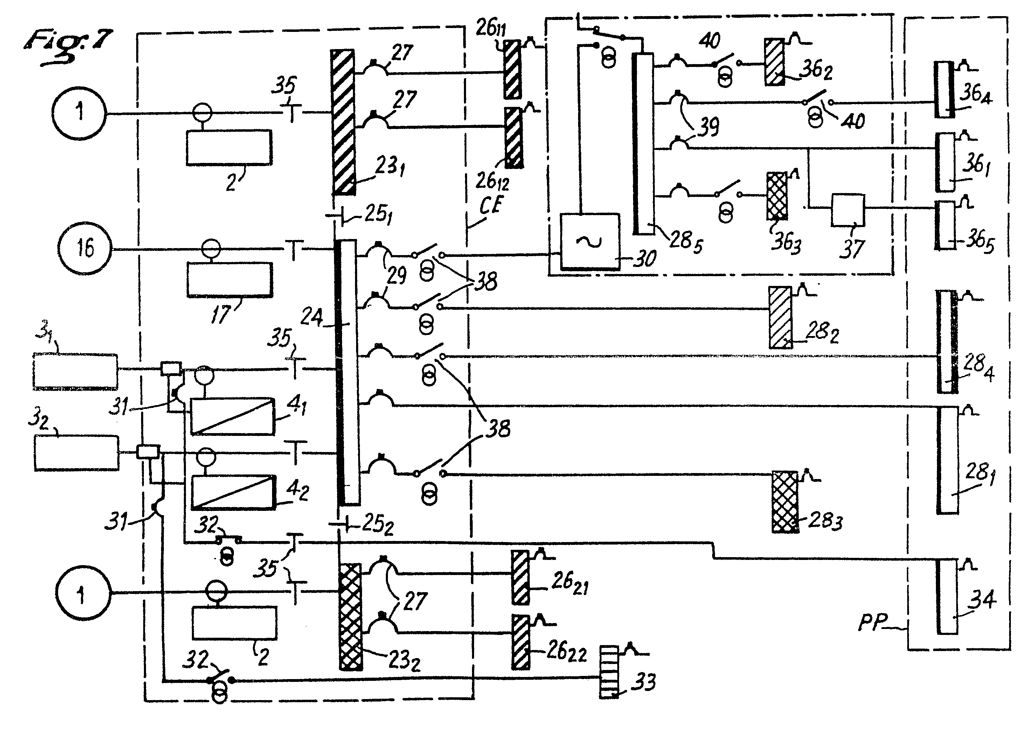

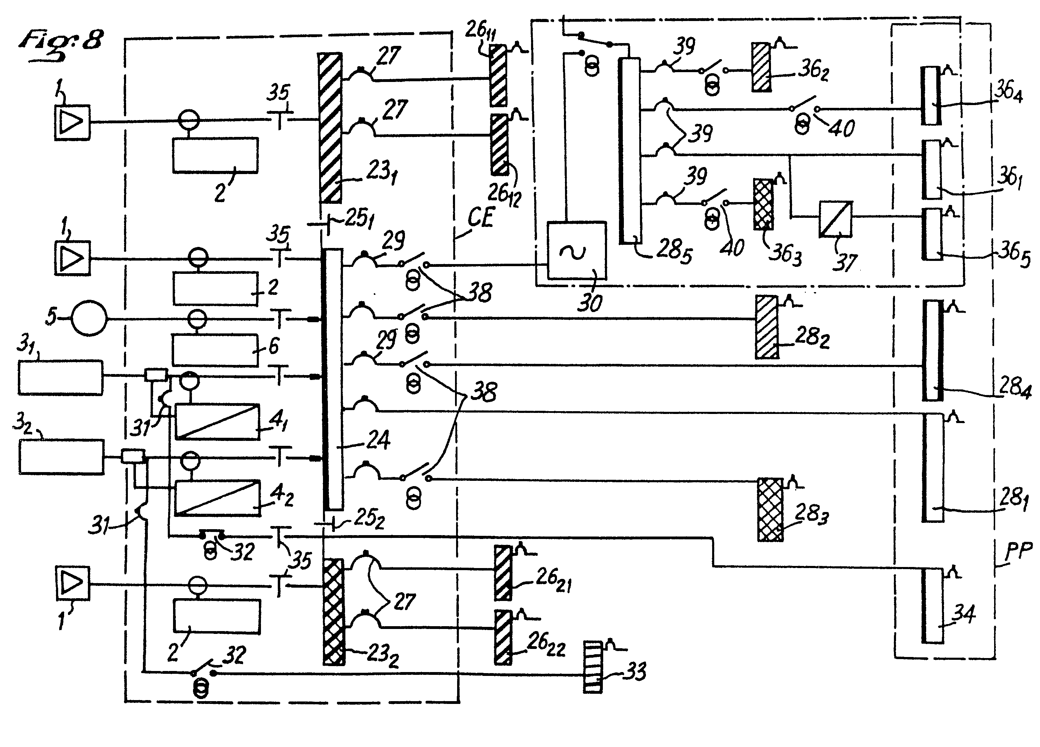

Les fig. 7 et 8 illustrent des exemples de réalisation d'architecture conformes à ce qui précède.

Le système de la fig. 7, qui correspond à celui de la fig. 6a, est normalement alimenté par deux génératrices 1 en courant continu, qui servent également au démarrage des moteurs M. Dans le cas de la fig. 7, on a prévu une prise de parc continue 16, pourvue de sa sécurité 17 (incorporée au cœur CE). Le système de la fig. 8, qui correspond à celui de la fig. 6b, est alimenté en courant continu à partir de deux alternateurs et de trois transfo-redresseurs 1, dont l'un est relié à la barre primaire 24. De plus, dans le système de la fig. 8, on a prévu un groupe auxiliaire APU 5 qui sert également au démarrage des moteurs.

Comme on peut le voir sur ces fig. 7 et 8, ces exemples de systèmes selon l'invention comportent:

– deux barres primaires normales $23_1$, $23_2$ et une barre primaire de secours 24;
– une barre secondaire 34 alimentée par la batterie $3_1$ à travers un disjoncteur secondaire 31 et un contacteur secondaire 32 du cœur CE et disposée dans le poste de pilotage PP;
– une barre secondaire 33 alimentée par la batterie $3_2$ à travers un disjoncteur secondaire 31 et un contacteur secondaire 32 du cœur CE;
– quatre barres secondaires $26_{11}$, $26_{12}$, $26_{21}$ et $26_{22}$ d'alimentation normale reliées respectivement aux barres primaires $23_1$ et $23_2$;
– une barre secondaire $28_1$ constamment alimentée à partir de la barre primaire 24 et disposée dans le poste de pilotage PP;
– deux barres secondaires $28_2$ et $28_3$ qui restent alimentées en dernier secours en vol de croisière, reliées à la barre primaire 24 à travers des disjoncteurs primaires 29 et des contacteurs primaires 38;
– une barre secondaire $28_4$ disposée dans le poste de pilotage PP et conservée en dernier secours dans la phase d'atterrissage; la barre secondaire $28_4$ est reliée à la barre primaire 24 à travers un disjoncteur primaire 29 et un contacteur primaire 38;
– une barre secondaire $28_5$ de secours en courant alternatif, qui se subdivise en une barre secondaire de secours en courant alternatif $36_1$ constamment alimentée et disposée dans le poste de pilotage PP, en deux barres secondaires $36_2$ et $36_3$ conservée en dernier secours en vol de croisière et une barre secondaire $36_4$ disposée dans le poste de pilotage PP et conservée en dernier secours dans la phase d'atterrissage. La barre secondaire $36_1$ qui est parcourue par un courant de par exemple 115 volts à 400 Hz, peut elle-même donner naissance à une barre secondaire $36_5$, disposée dans le poste de pilotage PP et véhiculant par exemple un courant de 26 volts, 400 Hz, grâce à un transformateur 37.

Comme on peut le voir sur les fig. 7 et 8, les liaisons entre la barre primaire 24 et les barres secondaires $28_2$, $28_3$, $28_4$ et $28_5$ s'effectuent par l'intermédiaire des disjoncteurs primaires 29, associés aux contacteurs primaires de délestage 38 (seule la liaison entre la barre primaire 24 et la barre secondaire $28_1$ étant directe, c'est-à-dire ne comportant qu'un disjoncteur primaire 29, à l'exclusion d'un contacteur 38). De même, les liaisons entre la barre secondaire $28_5$ et les barres secondaires $36_2$, $36_3$ et $36_4$ sont réalisées par l'intermédiaire de disjoncteurs secondaires 39, associés à des contacteurs secondaires de délestage 40 (seule la liaison entre la barre secondaire $28_5$ et les barres secondaires $36_1$ et $36_5$ étant directe, c'est-à-dire ne comportant qu'un disjoncteur secondaire 39 à l'exclusion d'un contacteur 40).

La présence des contacteurs de délestage 38 et 40 est due au fait que les disjoncteurs 29 et 39 utilisés sont du type classique à réarmement manuel.

Cependant, de tels disjoncteurs à commande manuelle obligent:

– soit à les placer dans une zone accessible à l'équipage;
– soit à admettre que le risque de déclenchement intempestif des disjoncteurs est compatible avec les objectifs de sécurité associés aux systèmes qu'ils alimentent.

Le premier choix est pénalisant car le meilleur emplacement pour le cœur électrique CE contenant les disjoncteurs primaires 29 se situe en général dans une zone centrale de l'avion située entre les moteurs et les dispositifs utilisateurs, et non au poste de pilotage.

Le deuxième choix, bien que défendable dans l'état actuel de la technique, risque néanmoins de susciter des craintes de la part de l'équipage.

L'utilisation de contacteurs-disjoncteurs commandés à distance 41 et 42, respectivement à la place des disjoncteurs 29 et 39 permet de supprimer les contacteurs 38 et 40 et de se libérer des contraintes concernant l'emplacement du cœur électrique CE. Ceci permet en outre une plus grande souplesse dans les possibilités de délestage correspondant aux cas de recherche de fumée et de dernier secours.

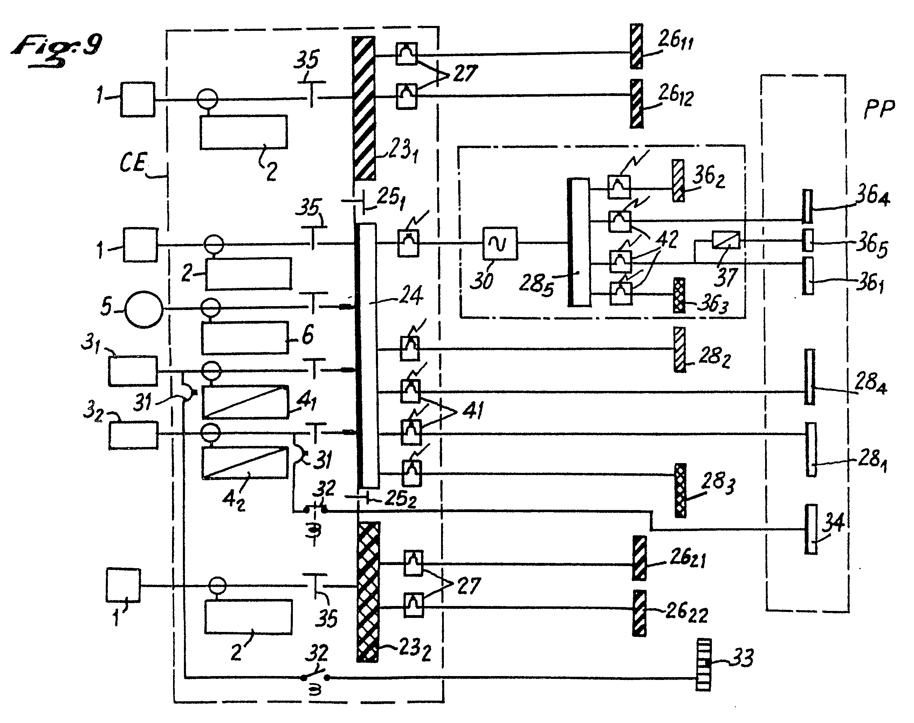

La fig. 9 illustre l'architecture du système selon l'invention correspondant à l'utilisation de contacteurs-disjoncteurs 41 et 42 à commande à distance.

Les disjoncteurs-contacteurs tels que ceux utilisés en 41 et 42 sont plus coûteux que les disjoncteurs à réarmement manuel 27, 29 et 39. Aussi, l'utilisation de tels disjoncteurs-contacteurs peut-elle être limitée aux barres de secours $28_1$ à $28_5$ et $36_1$ à $36_5$. Dans le cas où des considérations de coût ne seraient pas primordiales, on pourrait avantageusement utiliser des disjoncteurs-contacteurs à commande à distance pour effectuer les fonctions des disjoncteurs primaires 27 et secondaires 31.

Bien entendu, le dimensionnement des éléments du système de génération et de distribution électrique selon l'invention dépend du type d'avion envisage, de sa mission et de sa capacité d'emport en passagers; cependant, certains éléments sont de nature à restreindre les différences de puissance que l'on pourrait imaginer.

En effet, les Compagnies utilisatrices ne souhaitent pas que les avions comportent trop de batteries électriques qui pèsent lourd et posent des problèmes d'entretien; en outre, l'utilisation de fortes puissances électriques sous une tension relativement faible (actuellement standardisée à 28 V) imposerait des câblages très lourds et très difficiles à installer.

Le dimensionnement des batteries et des éléments du cœur électrique CE est en fait déterminé, d'une part par la puissance instantanée nécessaire au démarrage des moteurs, d'autre part par la puissance nécessaire pour maintenir les équipements vitaux en fonctionnement, pendant une durée suffisante, en dernier secours.

En ce qui concerne la puissance de démarrage, dans le cas d'avions bimoteurs commerciaux, on peut distinguer deux catégories importantes:

1) les avions qui comportent des moteurs démarrés directement par l'intermédiaire de démarreurs électriques ou génératrices-démarreurs et dont la puissance de chaque moteur est relativement moyenne (aux environs de 800 à 1000 CV par exemple);

2) les avions plus puissants comportant un groupe générateur auxiliaire (APU) permettent de démarrer les moteurs à l'air comprimés, ces groupes générateurs auxiliaires étant des machines d'une puissance de l'ordre de 600 à 800 CV.

En ce qui concerne l'énergie à stocker en dernier secours les avions de la seconde catégorie ont généralement un besoin un peu plus important que les avions de la première (car ils sont plus sophistiqués).

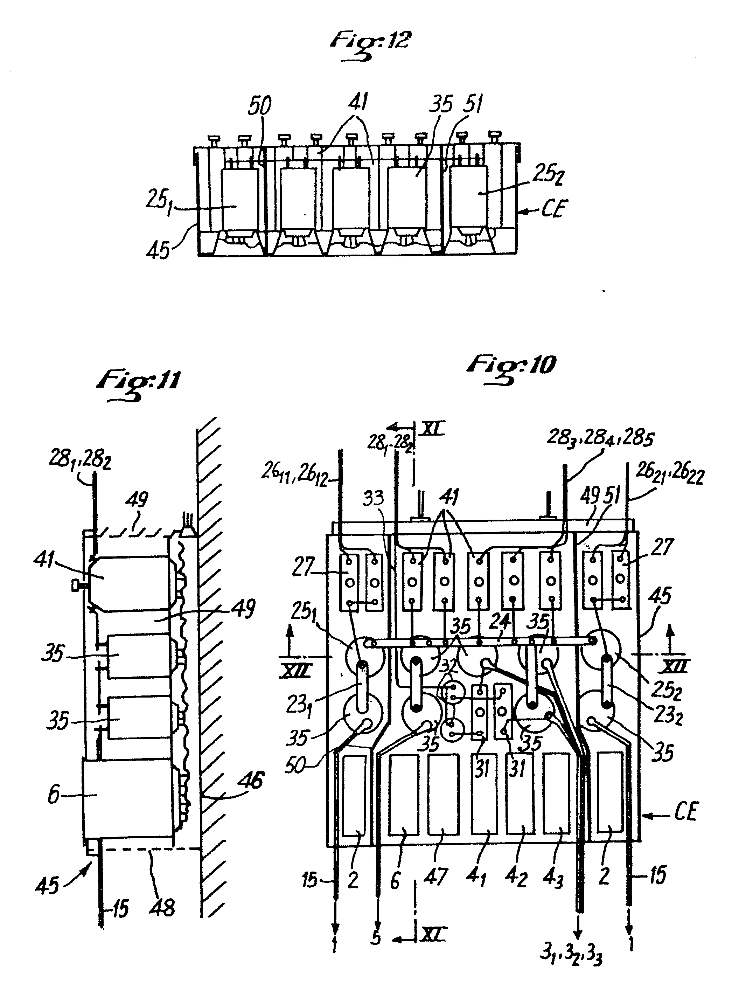

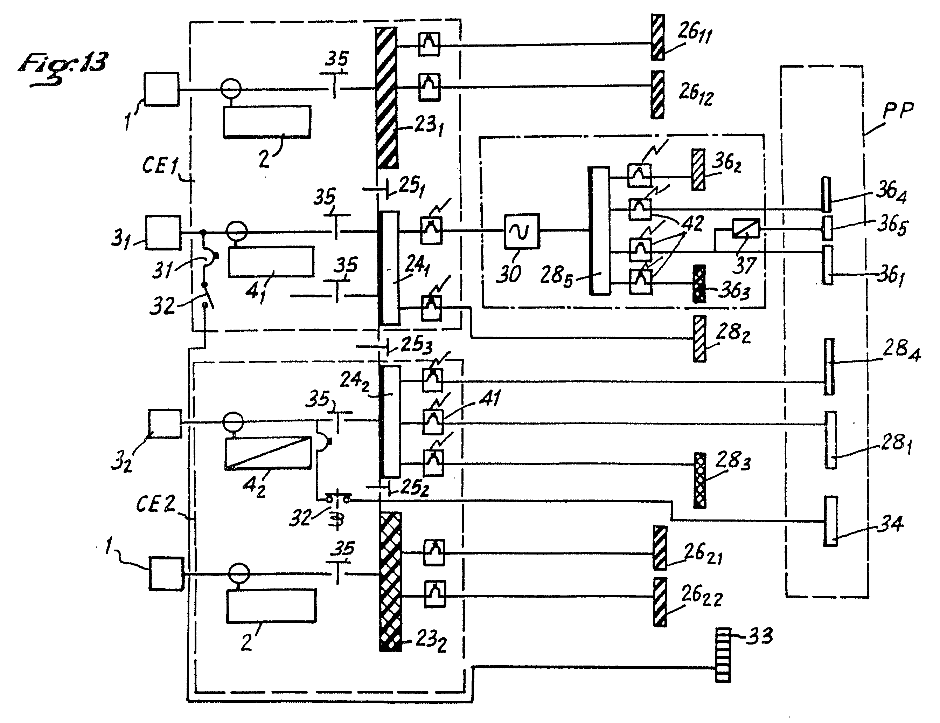

Les fig. 10, 11 et 12 donnent un exemple de réalisation avantageux du cœur électrique CE selon l'invention, pour le cas d'un système pour avion bimoteur du type de la fig. 9 muni de deux alternateurs équipés chacun d'un transfo-redresseur 1, d'un groupe générateur auxiliaire 5 de type APU et de trois batteries $3_1$, $3_2$, et $3_3$.

Cet exemple de réalisation comporte un boîtier 45 fixé part son fond sur une paroi verticale 46. La face avant du boîtier est ouverte (mais éventuellement obturable par une porte ou un couvercle) de façon à rendre accessibles les différents éléments qu'il contient.

A la partie inférieure du boîtier 45 est disposée toute la partie électronique du cœur CE, à savoir les protections 2 des transfo-redresseurs 1, les protections $4_1$, $4_2$ et $4_3$ des batteries $3_1$, $3_2$ et $3_3$, la protection 6 du groupe 5 et un module de test 47, les liaisons 15 aux transfo-redresseurs 1, aux batteries $3_1$, $3_2$ et $3_3$ et au démarreur du groupe 5 pénétrant dans ledit boîtier 45 par sa partie inférieure. La paroi inférieure du boîtier 45 est constituée par une grille 48.

Dans la partie médiane (par rapport à la hauteur) du boîtier sont logés les contacteurs primaires $25_1$, $25_2$, 35, ainsi que les disjoncteurs secondaires 31 et leurs contacteurs 32 associés, les barres primaires normales $23_1$ et $23_2$ et la barre primaire essentielle et de secours 24.

A la partie supérieure du boîtier sont logés les disjoncteurs 27 et 41 et les liaisons aux barres secondaires $26_{11}$, $26_{12}$, $26_{21}$, $26_{22}$ d'alimentation normale et aux barres secondaires $28_1$ à $28_5$ d'alimentation conservées en secours, ces liaisons sortant du boîtier 45 par sa partie supérieure conformée en grille 49.

Dans le sens de la largeur, l'intérieur du boîtier 45 est subdivisé par deux parois coupe-feu 50 et 51 en un espace médian comprenant les protection $4_1$, $4_2$, $4_3$ et 6, le module de test 47, les disjoncteurs secondaires 31, les contacteurs 32, les contacteurs 35, la barre primaire de secours 24 et les disjoncteurs 41, et en deux espaces latéraux associés chacun à une ligne d'alimentation normale à partir d'un générateur 1.

L'intérêt principal de la réalisation sous forme intégrée telle que montrée par les fig. 10, 11 et 12 de l'ensemble constituant le cœur électrique CE selon l'invention réside essentiellement dans les gains que l'on peut obtenir:

1) sur la masse, par réduction des liaisons entre les divers composants et suppression de tous les éléments de raccordement (connecteurs-boîtes à bornes etc.) qui sont nécessaires lorsque les éléments sont séparés;

2) sur le cycle de fabrication, par la possibilité de réaliser un ensemble complet qui est contrôlable avant montage et qui est installé sur un avion par des branchements simples;

3) sur la facilité de maintenance, par l'étude rationnelle des éléments remplaçables identifiés par un système d'aide à la maintenance;

4) sur le prix de revient, qui peut être réduit en corrélation avec le gain de masse, le gain de temps de montage, et l'augmentation de la série pour les éléments couvrant plusieurs types d'avions;

Le mode de réalisation pratique des fig. 10, 11, et 12 tient compte d'un certain nombre de contraintes:

– afin d'obtenir le meilleur niveau de sécurité, ce mode de réalisation permet malgré une concentration élevée de composants, de conserver entre les circuits une ségrégation suffisante pour qu'une panne (feu ou rupture) sur un élément, ne porte pas préjudice aux autres composants. Ceci est obtenu par la disposition rationnelle des éléments et le cloisonnement 50, 51;

– le cœur électrique CE selon l'invention constitue un ensemble démontable, ce qui permet d'une part une installation facile à la construction de l'avion, d'autre part un échange en maintenance, ou lors de grandes visites. Par ailleurs, les composants qu'il comporte sont facilement accessibles de l'extérieur pour permettre un remplacement in situ. A cet effet, la partie électronique $(2, 6, 4_1, 4_2, 4_3, 47)$ peut se présenter sous la forme de modules ou cartes embrochables;

– afin d'éviter des servitudes coûteuses, les éléments et leur disposition ont été étudiés pour que la dissipation thermique due au fonctionnement dans toutes les configurations normales et pannes soit assurée par ventilation naturelle à travers les grilles 48 et 49, tout en permettant l'adaptation d'une ventilation forcée si cela est nécessaire.

Dans certains cas, il peut être avantageux de fractionner l'unité centrale CE en deux parties $CE_1$ et $CE_2$ physiquement distinctes. La fig. 13 montre un exemple de réalisation de ce type, appliqué au système de la fig. 9. La barre primaire 24 est alors elle-même fractionnée en deux parties $24_1$ et $24_2$, disposées respectivement dans les parties $CE_1$ et $CE_2$ et reliées l'une à l'autre par un contacteur $25_3$: l'une des batteries $3_1$ alimente la barre $24_1$ et l'autre batterie $3_2$ la barre $24_2$. On voit que cette disposition permet d'accroître la sécurité par rapport au système de la fig. 9, puisqu'alors on dispose de deux barres primaires $24_1$ et $24_2$, au lieu d'une seule, pouvant éventuellement être soit montées en série (pour former la barre 24) soit séparées l'une de l'autre par commande du contacteur $25_3$ en cas d'incident sur l'une d'elles.

La liaison des cœurs $CE_1$ et $CE_2$ peut être protégée par une protection située dans chacun des cœurs.

Quelle que soit la combinaison, cette protection peut être réalisée, soit en dédoublant le contacteur $25_3$ en deux contacteurs montés chacun dans les cœurs $CE_1$ et $CE_2$, soit par suppression des contacteurs $25_1$ et $25_2$, les barres $23_1$ et $24_1, 24_2$ et $23_2$ devenant unique.

## Revendications

1. Système de production et de distribution d'énergie électrique pour véhicule, notamment pour aéronef, comportant au moins deux générateurs principaux (1) de type continu ou alternatif mûs par les moteurs (M) du véhicule, au moins une batterie d'accumulateurs (3), des démarreurs (7) pour lesdits moteurs, éventuellement constitués par les générateurs principaux (1) eux-mêmes, un cœur électrique (9) formé de barres primaires alimentées à partir desdits générateurs principaux, de contacteurs primaires et de disjoncteurs primaires, un ensemble (10) de barres secondaires alimentées à partir des barres primaires, de contacteurs secondaires et de disjoncteurs secondaires, un ensemble (11) de boîtes à relais et de meubles électriques, un ensemble (12) de meubles électroniques, des panneaux de commande (13), des dispositifs utilisateurs (14), ainsi qu'une pluralité de moyens de régulation et/ou de protection (2, 4, 6, 8, 17), notamment pour les générateurs (1), la batterie (3) et les démarreurs (7), caractérisé en ce qu'il comporte une unité centrale CE regroupant ledit cœur électrique (9), une partie dudit ensemble (10) de disjoncteurs et de contacteurs secondaires, et lesdits moyens de régulation et/ou de protection (2, 4, 6, 8, 17) et en ce que le reste dudit ensemble (10) des disjoncteurs et des contacteurs secondaires est réparti entre l'ensemble (11) des boîtes à relais et de meubles électriques, l'ensemble (12) des meubles électroniques et chacun des panneaux de commande (13).

2. Système selon la revendication 1, caractérisé en ce que ladite unité centrale CE comporte une barre primaire (23) d'alimentation normale, alimentée par l'ensemble des générateurs (1) en parallèle à travers lesdits moyens de protection (2) de ces derniers et alimentant une pluralité de barres secondaires (26) d'alimentation normale à travers des premiers disjoncteurs primaires (27); une barre primaire (24) d'alimentation essentielle et de secours reliée à ladite batterie (3) à travers les moyens de protection et de régulation (4) de celle-ci et à ladite barre primaire d'alimentation normale (23) à travers un contacteur primaire (25) et alimentant une pluralité de barres secondaires (28) d'alimentation essentielle et de secours à travers des seconds disjoncteurs primaires (29); et au moins un disjoncteur secondaire (31) et un contacteur secondaire (32) reliant directement à la batterie (3) une barre secondaire (33 ou 34).

3. Système selon la revendication 1, caractérisé en ce que ladite unité centrale (CE) comporte autant de barres primaires $(23_1, 23_2)$ d'alimentation normale qu'il y a de générateurs (1) et chacune de ces barres primaires $(23_1, 23_2)$ d'alimentation normale est alimentée par un seul générateur (1) à travers les moyens de protection (2) de ce dernier et alimente au moins une barre secondaire $(26_1, 26_2)$ d'alimentation normale à travers un premier disjoncteur primaire (27); une barre primaire (24) d'alimentation essentielle et de secours reliée à ladite batterie (3) à travers les moyens de protection et de régulation (4) de celle-ci et à chacune des barres primaires $(23_1, 23_2)$ d'alimentation normale par une pluralité de contacteurs primaires $(25_1, 25_2)$ et alimentant une pluralité de barres secondaires (28) d'alimentation essentielle et de secours à travers des seconds disjoncteurs primaires (29); et au moins un disjoncteur secondaire (31) et un contacteur secondaire (32) reliant directement à la batterie (3) une barre secondaire (33 ou 34).

4. Système selon l'une quelconque des revendications 2 ou 3, le véhicule étant un aéronef, caractérisé en ce que ladite unité centrale CE comporte deux disjoncteurs secondaires (31) et deux contacteurs secondaires (32) associés reliant à la batterie (3) deux barres secondaires dont l'une (34) alimente des systèmes devant restés constamment branchés et dont l'autre (33) sert spécifiquement à alimenter des équipements lorsque l'aéronef est au sol.

5. Système selon l'une quelconque des revendications 2 à 4, caractérisé en ce qu'il comporte au moins deux batteries d'accumulateurs ($3_1$ et $3_2$) reliées en parallèle à ladite barre primaire (24) d'alimentation de secours.

6. Système selon l'une quelconque des revendications 2 à 5, le véhicule étant un aéronef, caractérisé en ce que la pluralité des barres secondaires (28) d'alimentation essentielle et de secours alimentées par la barre primaire essentielle et de secours (24) à travers les seconds disjoncteurs primaires (29) comportent au moins une barre secondaire ($28_1$) disposée dans le poste de pilotage PP et destinée à alimenter des équipements d'approche et d'atterrissage, au moins une barre secondaire ($28_2$) alimentant des disjoncteurs accessibles aux pilotes et destinée à une alimentation de secours commun, et au moins une, mais de préférence deux, barres secondaires ($28_2$ et $28_3$) destinées à une alimentation conservée en secours.

7. Système selon l'une quelconque des revendications 2 à 6 du type à courant continu, le véhicule étant un aéronef, caractérisé en ce que au moins l'une des barres secondaires conservées en secours ($28_5$) est alimentée par la barre primaire de secours (24) à travers lesdits seconds disjoncteurs primaires (29) et un convertisseur continu-alternatif (30) et cette barre secondaire essentielle et de secours ($28_5$) en courant alternatif alimente une pluralité de sous-barres secondaires alternatives ($36_1$ à $36_5$), dont au moins l'une (36) alimente des disjoncteurs accessibles aux pilotes et est destinée à alimenter des équipements d'approche et d'atterrissage, dont au moins une autre ($36_4$) alimente des disjoncteurs accessibles aux pilotes et est destinée à une alimentation conservée en secours et dont au moins une troisième ($36_2$ ou $36_3$) est disposée en fonction des commodités de l'installation et destinée à une alimentation de secours.

8. Système selon l'une quelconque des revendications 1 à 7, caractérisé en ce que au moins lesdits seconds disjoncteurs primaires sont du type disjoncteur-contacteur.

9. Système selon l'une quelconque des revendications 1 à 8, caractérisé en ce que ladite unité centrale CE comporte un boîtier mural (45) dont la partie inférieure enferme les différents moyens de régulation et/ou de protection (2, 6, $4_1$, $4_2$, $4_3$, 47), dont la partie médiane par rapport à la hauteur comporte les contacteurs primaires ($25_1$, $25_2$, 35), les disjoncteurs secondaires (31), les contacteurs secondaires associés (32) et les barres primaires ($23_1$, $23_2$ et 24) et dont la partie supérieure comprend les disjoncteurs primaires (27, 41).

10. Système selon la revendication 9, pour un système destiné à un avion bimoteur et comportant deux barres primaires ($23_1$ et $23_2$) d'alimentation normale et une barre primaire (24) d'alimentation essentielle et de secours, caractérisé en ce que l'intérieur du boîtier mural (45) est séparé dans le sens de la hauteur par des parois coupe-feu (50, 51) délimitant trois compartiments, tels que le compartiment médian enferme les éléments ($4_1$, $4_2$, $4_3$, 6, 47, 32, 35, 41) relatifs à la barre primaire (24) d'alimentation essentielle et de secours, tandis que chacun des compartiments latéraux enferme les éléments (2, 35, $25_1$, $25_2$, 27) relatifs à l'une desdites barres primaires d'alimentation normale ($23_1$ ou $23_2$).

11. Système selon l'une quelconque des revendications 9 ou 10, caractérisé en ce que son boîtier mural (45) comporte des parois perforées (48, 49) permettant une ventilation naturelle ou l'adaptation d'une ventilation forcée.

12. Système selon l'une quelconque des revendications 9 à 11, caractérisé en ce que la barre d'alimentation essentielle et de secours (24) est fractionnée en deux parties ($24_1$ et $24_2$) réunies par un contacteur ($25_3$) et en ce que le boîtier mural (45) est également fractionné en deux parties $CE_1$ et $CE_2$ physiquement séparées.

**Claims**

1. System for producing and distributing electrical energy for vehicles, particularly for aircraft, comprising at least two main generators (1) of D.C. or A.C. type moved by the motors (M) of the vehicle, at least one storage battery (3), starters (7) for said motors, possibly constituted by the main generators (1) themselves, an electrical power centre (9) formed by primary bars supplied from said main generators, primary contactors and primary circuit breakers, an assembly (10) of secondary bars supplied from the primary bars, secondary contactors and secondary circuit breakers, an assembly (11) of relay boxes and electrical bays, an assembly (12) of electronic bays, control panels (13), user devices (14), as well as a plurality of regulating and/or protecting means (2, 4, 6, 8, 17), particularly for the generators (1), the battery (3) and the starters (7), characterized in that it comprises a central unit CE grouping together said electrical power centre (9), a part of said assembly (10) of circuit breakers and secondary contactors, and said regulating and/or protecting means (2, 4, 6, 8, 17) and in that the rest of said assembly (10) of circuit breakers and secondary contactors is distributed between the assembly (11) of relay boxes and electrical bays, the assembly (12) of the electronic bays and each of the control panels (13).

2. System according to claim 1, characterized in that said central unit CE comprises a primary bar (23) of normal supply, supplied by the assembly of generators (1) in parallel through said means (2) for protecting the latter and supplying a plurality of secondary bars (26) of normal supply through first primary circuit breakers (27); a primary bar (24) of essential and emergency supply connected to said battery (3) through the means (4) for protecting and regulating the latter and to said primary bar (23) of normal supply through a primary contactor (25) and supplying a plurality of secondary bars (28) of essential and emergency supply through second primary circuit breakers (29); and at least one secondary circuit breaker (31) and one secondary contactor (32) directly connecting a secondary bar (33 or 34) to the battery (3).

3. System according to claim 1, characterized in that said central unit CE comprises as many primary bars ($23_1$, $23_2$) of normal supply as there are generators (1) and each of these primary bars ($23_1$, $23_2$) of normal supply is supplied by only one generator (1) through the means (2) for protecting the latter and supplies at least one secondary bar ($26_1$, $26_2$) of normal supply through a first primary circuit breaker (27); a primary bar (24) of essential and emergency supply connected to said battery (3) through the means (4) for protecting and regulating the latter and to each of the primary bars ($23_1$, $23_2$) of normal supply by a plurality of primary contactors ($25_1$, $25_2$) and supplying a plurality of secondary bars (28) of essential and emergency supply through second primary circuit breakers (29); and at least one secondary circuit breaker (31) and one secondary contactor (32) directly connecting a secondary bar (33 or 34) to the battery (3).

4. System according to anyone of claims 2 or 3, said vehicle being an aircraft, characterized in that said central unit CE comprises two secondary circuit breakers (31) and two associated secondary contactors (32) connecting to the battery (3) two secondary bars of which one (34) supplies systems having to remain constantly connected and of which the other (33) serves specifically to supply equipment when the aircraft is on the ground.

5. System according to anyone of claims 2 to 4, characterized in that it comprises at least two storage batteries ($3_1$ and $3_2$) connected in parallel to said primary bar (24) of emergency supply.

6. System according to anyone of claims 2 to 5, said vehicle being an aircraft, characterized in that the plurality of essential and emergency secondary bars (28) supplied by the essential and emergency primary bar (24) through the second primary circuit breakers (29) comprise at least one secondary bar ($28_1$) disposed at the pilot's station PP and adapted to supply approach and landing equipment, at least one secondary bar ($28_2$) supplying circuit breakers accessible to the pilots and adapted for common emergency supply, and at least one, but preferably two, secondary bars intended for supply kept in emergency.

7. System according to anyone of claims 2 to 6 of the D.C. type, said vehicle being an aircraft, characterized in that at least one of the emergency secondary bars ($28_5$) is supplied by the emergency primary bar (24) through said second primary circuit breakers (29) and a D.C.-A.C. converter (30) and this essential and emergency secondary bar ($28_5$) in A.C. mode supplies a plurality of A.C. secondary sub-bars ($36_1$ to $36_5$), of which at least one (36) supplies circuit breakers accessible to the pilots and is adapted to supply approach and landing equipment, of which at least one other ($36_4$) supplies circuit breakers accessible to the pilots and is adapted for supply kept in emergency and of which at least one third ($36_2$ or $36_3$) is disposed as a function of commodities of the installation and intended for emergency supply.

8. System according to anyone of claims 1 to 7, characterized in that at least said second primary circuit breakers are of the circuit breaker-contactor type.

9. System according to anyone of claims 1 to 8, characterized in that said central unit CE comprises a mural box (45) of which the lower part encloses the different regulating and/or protecting means (2, 6, $4_1$, $4_2$, $4_3$, 47), of which the median part with respect to the height comprises the primary contactors ($25_1$, $25_2$, 35), the secondary circuit breakers (31), the associated secondary contactors (32) and the primary bars ($23_1$, $23_2$ and 24) and of which the upper part comprises the primary circuit breakers (27, 41).

10. System according to claim 9, for a system intended for a twin-engined aircraft and comprising two primary bars ($23_1$ and $23_2$) of normal supply and a primary bar (24) of essential and emergency supply, characterized in that the interior of the mural box (45) is separated heightwise by fire-stop walls (50, 51) defining three compartments, such that the median compartment encloses the elements ($4_1$, $4_2$, $4_3$, 6, 47, 32, 35, 41) relative to the primary bar (24) of essential and emergency supply, whilst each of the lateral compartments encloses the elements (2, 35, $25_1$, $25_2$, 27) relative to one of said primary bars of normal supply ($23_1$ or $23_2$).

11. System according to anyone of claims 9 or 10, characterized in that its mural box (45) comprises perforated walls (48, 49) allowing natural ventilation or the adaptation of a forced ventilation.

12. System according to anyone of claims 9 to 11, characterized in that the bar (24) of essential and emergency supply is divided into two parts ($24_1$ and $24_3$) connected by a contactor ($25_3$) and the mural box (45) is also divided into two physically separated parts $CE_2$ and $CE_3$.

**Patentansprüche**

1. System zur Erzeugung und Verteilung elektrischer Energie für ein Fahrzeug, insbesondere für ein Luftfahrzeug, bestehend aus zumindest zwei Hauptgeneratoren (1) für Gleich- oder Wechselstrom, die von den Motoren (M) des Fahrzeugs bewegt werden, zumindest einer Akkumulatorenbatterie (3), Anlasser (7) für die Motoren, die gegebenenfalls aus den Hauptgeneratoren (1) selbst bestehen können, einem Herzstück (9), das aus Primärschienen, die ausgehend von den Hauptgeneratoren, den Primäreinschaltern und -abschaltern gespeist werden, und aus einer Einheit (10) aus Sekundärschienen gebildet ist, die ausgehend von den Primärschienen, Sekundäreinschaltern und -abschaltern gespeist werden, einer Relais- und Elektrokasteneinheit (11), einer Elektronikeinheit (12), Steuertafeln (13), Anwendervorrichtungen (14) sowie aus mehreren Regel- und/oder Schutzeinrichtungen (2, 4, 6, 8, 17), insbesondere für die Generatoren (1), die Batterie (3) und den Anlasser (7), gekennzeichnet durch eine Zentraleinheit CE, in der das elektrische Herzstück (9), ein Teil der Einheit (10) der Sekundärein- und -abschalter sowie die Regel- und/oder Schutzeinrichtungen (2, 4, 6, 8, 17) gruppiert sind, und dadurch, dass der Rest der Einheit (10) der Sekundärein- und -abschalter in der Relais- und Elektrokasteneinheit (11), der Elektronikeinheit (12) und jeder der Steuertafeln (13) aufgeteilt untergebracht ist.

2. System nach Anspruch 1, dadurch gekennzeichnet, dass die Zentraleinheit CE eine Primärschiene (23) mit normaler Speisung, die von der Einheit der parallel geschalteten Generatoren (1) über deren Schutzeinrichtungen (2) gespeist wird und die über erste Primärabschalter (27) mehrere Sekundärschienen (26) mit normaler Speisung speist; eine Primärschiene (24) mit essentieller sowie unterstützenden Speisung, die über deren Schutz- und Regeleinrichtungen (4) an der Batterie (3) und über einen Primäreinschalter (25) an der Primärschiene mit normaler Speisung (23) liegt und über zweite Primärabschalter (29) mehrere Sekundärschienen (28) mit essentieller sowie unterstützender Speisung speist, und zumindest einen Sekundärabschalter (31) und einen Sekundäreinschalter (32) aufweist, die eine Sekundärschiene (33 oder 34) mit der Batterie (3) verbinden.

3. System nach Anspruch 1, dadurch gekennzeichnet, dass die Zentraleinheit CE eine der Anzahl der Generatoren entsprechende ebensogrosse Anzahl von Primärschienen ($23_1$, $23_2$) mit normaler Speisung, die jeweils von einem einzelnen Generator (1) über dessen Schutzeinrichtungen (2) gespeist werden und über einen ersten Primärabschalter (27) zumindest eine Sekundärschiene ($26_1$, $26_2$) mit normaler Speisung speist; eine Primärschiene (24) mit essentieller und unterstützender Speisung, die an einer Batterie über deren Schutz- und Regeleinrichtungen (4) liegt sowie durch mehrere Primäreinschalter ($25_1$, $25_2$) mit jeder Primärschiene ($23_1$, $23_2$) mit normaler Speisung verbunden ist und über zweite Primärabschalter (29) mehrere Sekundärschienen (28) mit essentieller und unterstützender Speisung speist, und zumindest einen Sekundärabschalter (31) und Sekundäreinschalter (32) aufweist, durch die eine Sekundärschiene (33 oder 34) unmittelbar mit der Batterie (3) verbunden werden.

4. System nach einem der Ansprüche 2 oder 3 in einem Luftfahrzeug, dadurch gekennzeichnet, dass die Zentraleinheit CE zwei Sekundärabschalter (31) sowie zwei Sekundäreinschalter (32) aufweist, durch die zwei Sekundärschienen mit der Batterie (3) verbunden werden, von denen eine (34) Systeme speist, die beständig angeschlossen bleiben müssen, und von denen die andere (33) spezifisch dazu dient, die Fremdausrüstung zu speisen, wenn sich das Luftfahrzeug am Boden befindet.

5. System nach einem der vorhergehenden Ansprüche 2 bis 4, dadurch gekennzeichnet, dass es zumindest zwei Akkumulatorbatterien ($3_1$ und $3_2$) aufweist, die an die Primärschiene (24) mit unterstützender Speisung parallel angeschlossen sind.

6. System für ein Luftfahrzeug nach einem der vorhergehenden Ansprüche 2 bis 5, dadurch gekennzeichnet, dass die Vielzahl der Sekundärschienen (28) mit essentieller und unterstützender Speisung, die über die zweiten Primärabschalter (29) von der Primärschiene mit essentieller und unterstützender Speisung (24) gespeist werden, zumindest eine Sekundärschiene ($28_1$) aufweist, die im Pilotenraum PP untergebracht ist und dazu dient, die Anflug- und Landeausrüstung zu speisen, wobei zumindest eine Sekundärschiene ($28_2$) die den Piloten zugänglichen und zu einer gemeinsamen unterstützenden Speisung bestimmten Abschalter speist und wobei zumindest eine, vorzugsweise jedoch zwei Sekundärschienen ($28_2$ und $28_3$) einer konservierten Notspeisung dienen.

7. System für ein Luftfahrzeug nach einem der vorhergehenden Ansprüche 2 bis 6 mit Gleichstrombetrieb, dadurch gekennzeichnet, dass zumindest eine der Sekundärschienen mit konservierter Notspeisung ($28_5$) über die zweiten Primärabschalter (29) und einen Gleichstrom-Wechselstrom-Umformer (30) durch die Primärschiene (24) mit unterstützender Speisung und die Sekundärschiene mit essentieller und unterstützender Speisung ($28_5$) mit Wechselstrom mehrere Sekundärwechselstromteilschienen ($36_1$ bis $36_5$) speist, von denen zumindest eine (36) Abschalter speist, die dem Piloten zugänglich sind und die der Speisung der Anflug- und Landeausrüstung dienen, von denen eine weitere ($36_4$) Abschalter speist, die dem Piloten zugänglich sind und die der konservierten Notspeisung dient, und von denen zumindest eine dritte ($36_2$ oder $36_3$) nach Massgabe der gegebenen Einrichtung der Anlage angeordnet ist und der unterstützenden oder Notspeisung dient.

8. System nach einem der Ansprüche 1 bis 7, dadurch gekennzeichnet, dass zumindest die zweiten Primärabschalter als Schaltschütze ausgebildet sind.

9. System nach einem der Ansprüche 1 bis 8, dadurch gekennzeichnet, dass die Zentraleinheit CE einen Wandkasten (45) umfasst, dessen unterer Teil verschiedene Regel- und/oder Schutzeinrichtungen (2, 6, $4_1$, $4_2$, $4_3$, 47) einschliesst, dessen gegenüber seiner Höhe mittlerer Teil die Primäreinschalter ($25_1$, $25_2$, 35), die Sekundärabschalter (31), die Sekundäreinschalter (32) sowie die Primärschienen ($23_1$, $23_2$ und 24) enthält und dessen oberer Teil die Primärabschalter (27, 41) aufweist.

10. System nach Anspruch 9 zur Verwendung in einem zweimotorigen Luftfahrzeug und mit zwei Primärschienen ($23_1$ und $23_2$) normaler Speisung und einer Primärschiene (24) essentieller und unterstützender Speisung, dadurch gekennzeichnet, dass das Innere des Wandkastens (45) in Hinblick auf seine Höhe durch feuerhemmende Wände (50, 51) abgetrennt ist, um drei Fächer zu bilden, wobei das Mittelfach die Teile ($4_1$, $4_2$, $4_3$, 6, 47, 32, 35, 41) umfasst, die mit der Primärschiene (24) mit essentieller und unterstützender Speisung in Beziehung stehen, während jedes der Seitenfächer die Teile (2, 35, $25_1$, $25_2$, 27) einschliesst, die mit den Primärschienen mit normaler Speisung ($23_1$ oder $23_2$) in Beziehung stehen.

11. System nach einem der Ansprüche 9 oder 10, dadurch gekennzeichnet, dass dessen Wandkasten (45) perforierte Wände aufweist, durch die hindurch eine natürliche Belüftung betrieben werden kann oder die einer Fremdbelüftung zugeführt werden können.

12. System nach einem der Ansprüche 9 bis 11, dadurch gekennzeichnet, dass die Schiene mit essentieller und unterstützender Speisung (24) in zwei Teile ($24_1$ und $24_2$) unterteilt ist, die durch einen Einschalter ($25_3$) miteinander verbunden sind, und dass der Wandkasten (45) gleichermassen in zwei Teile $CE_1$ und $CE_2$ unterteilt ist, die körperlich voneinander getrennt sind.

Fig. 1

Fig. 2

Fig. 3

0 093 654

Fig.4a

Fig.4b

Fig.5a

17

0 093 654

Fig. 5b

Fig. 6a

Fig. 6b

19

Fig.1

Fig. 8

Fig: 9

Fig: 12

Fig: 11

Fig: 10

Fig.13